(19) Europäisches Patentamt
European Patent Office
Office européen des brevets

(11) EP 4 617 324 A1

(12) EUROPEAN PATENT APPLICATION
published in accordance with Art. 153(4) EPC

(43) Date of publication:
**17.09.2025 Bulletin 2025/38**

(21) Application number: **23888599.0**

(22) Date of filing: **01.11.2023**

(51) International Patent Classification (IPC):
***C08L 101/00*** (2006.01) ***C08K 3/08*** (2006.01)
***C08K 5/521*** (2006.01) ***C08K 5/524*** (2006.01)

(52) Cooperative Patent Classification (CPC):
**C08K 3/08; C08K 5/521; C08K 5/524; C08L 101/00**

(86) International application number:
**PCT/JP2023/039505**

(87) International publication number:
**WO 2024/101251 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 JP 2022179002**

(71) Applicant: **TOYOBO MC Corporation**
**Osaka 530-0001 (JP)**

(72) Inventors:
- **MAEDA, Maki**
  **Otsu-shi, Shiga 520-0292 (JP)**
- **KAMIYA, Motonobu**
  **Otsu-shi, Shiga 520-0292 (JP)**
- **HORI, Yusaku**
  **Otsu-shi, Shiga 520-0292 (JP)**
- **SHIMIZU, Takahiro**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

# (54) COMPOSITION COMPRISING THERMOPLASTIC RESIN OR THERMOPLASTIC ELASTOMER

(57) The present invention aims to provide a composition that exhibits an excellent effect of suppressing an increase in fluidity when heated and contains an iron-based inorganic filler together with a thermoplastic resin or a thermoplastic elastomer. The composition of the present invention comprises a component (A) that is at least one selected from a thermoplastic resin and a thermoplastic elastomer and a component (B) that is an iron-based inorganic filler at a mass ratio (component (A)/component (B)) in a range of 5/95 to 80/20, and comprises a component (C) that is at least one selected from a phosphite-based compound and a phosphate-based compound in an amount not exceeding 5 parts by mass relative to 100 parts by mass in total of the component (A) and the component (B).

EP 4 617 324 A1

**Description**

TECHNICAL FIELD

The present invention relates to a composition comprising a thermoplastic resin or a thermoplastic elastomer. The composition effectively suppresses an increase in fluidity when heated.

BACKGROUND ART

A composition containing an iron-based inorganic filler (iron-based filler) together with a thermoplastic resin or a thermoplastic elastomer is generally used for vibration damping applications, high specific gravity applications, noise prevention applications, and the like. The iron-based inorganic filler may also be used as a pigment. Furthermore, a composition obtained by kneading an iron-based inorganic filler into a thermoplastic resin or a thermoplastic elastomer can be used for a plastic magnet. The plastic magnet is a so-called bonded magnet. The plastic magnet has advantages such that it can be formed by injection molding or extrusion molding and thus has freedom in shape as compared to a sintered magnet; it is less likely to crack and chip than a sintered magnet; it has flexibility in the design of a magnetic circuit and permits reduction in motor cogging and improvement in sensor accuracy; integral molding or insert molding is available, so that adhesion and bonding processes can be omitted, and a final product can be made smaller and lighter; and the like. In order to expand the applications of such a composition obtained by kneading an iron-based inorganic filler into a thermoplastic resin or a thermoplastic elastomer, it is necessary to develop the applications in a wide range of resins and elastomers.

Patent Document 1 discloses a composition for vibration damping applications. Patent Document 1 discloses that a resin composition containing a thermally expandable inorganic substance and an inorganic filler having a true specific gravity of 3.0 or more is small in thickness and expresses a remarkable fire-resistant performance, and further expresses a soundproof vibration-damping effect. Iron is given as an example of the inorganic filler in this composition.

Patent Document 2 discloses a composition for high specific gravity applications. The composition of Patent Document 2 is a resin composition characterized by containing a thermoplastic resin and a thermosetting resin, containing powders of one or more substances selected from the group consisting of iron, nickel, and copper in an amount of 5 to 20 % by mass, containing tungsten powder or tungsten alloy powder and unavoidable impurities for the rest, and having a specific gravity adjusted to 10 to 13. It is stated that lead has been used in such a composition, but its use is gradually being restricted due to its toxicity, and powder composed of tungsten and one or more substances selected from the group consisting of iron, nickel, and copper is effectively used as a harmless material to replace lead.

In Patent Document 3, a resin composition characterized by containing metal powder dispersed in a thermosetting resin or room temperature-curable resin containing an acidic phosphoric acid ester compound is used for a reactor. It is stated that as the metal powder, iron powder or an alloy powder of iron and silicon is used, because it has small magnetostriction and is suitable as a magnetic material.

Patent Document 4 discloses a thermoplastic resin composition characterized by being obtained by mixing stainless steel powder, glass fiber, carbon black, and a saturated aliphatic carboxylic acid compound into nylon 6. It is stated that the use of stainless steel powder, which is an iron-based filler, makes it possible to provide a thermoplastic resin composition that is excellent in surface blackness of a molded article obtained and has a massive feeling.

Patent Document 5 discloses a high specific gravity thermoplastic resin composition containing a thermoplastic resin and iron powder, and it has been found that by using the iron powder coated with an oxide film, a thermoplastic resin composition having excellent plating processability, adhesion strength, and kneading moldability can be obtained without detriment to the metallic weightiness.

CITATION LIST

PATENT DOCUMENT

Patent Document 1: JP-A-2002-105328
Patent Document 2: JP-A-2005-106424
Patent Document 3: JP-A-2010-235729
Patent Document 4: JP-B2-3261274
Patent Document 5: JP-A-H6-88012

SUMMARY OF THE INVENTION

PROBLEMS TO BE SOLVED BY THE INVENTION

However, it has been newly found that when an iron-based inorganic filler is contained in a thermoplastic resin or a thermoplastic elastomer, a phenomenon that the fluidity of the resin or elastomer increases as the resin or elastomer is heated is caused. As the fluidity increases, overfilling occurs during molding, which may have adverse effects on the mass-productivity of molded articles obtained. Such adverse effects are particularly noticeable in injection molding.

The present invention is intended to solve the above problems, and its objective is to provide a composition capable of suppressing an increase in fluidity when heated, as compared to a composition containing only an iron-based inorganic filler together with a thermoplastic resin or a thermoplastic elastomer.

SOLUTION TO THE PROBLEMS

The inventors made intensive studies to solve the above-mentioned problems. As a result, the inventors have found that when an iron-based inorganic filler is contained in a thermoplastic resin or a thermoplastic elastomer to produce a composition, at least one selected from a phosphite-based compound and a phosphate-based compound is further contained therein, whereby an increase in fluidity when the composition is heated can be suppressed (as a result, the thermal stability and retention stability of the composition are improved, and the deterioration of the resin or elastomer can be suppressed), and the above-mentioned problems can be solved. The present invention has been completed based on this finding. More specifically, the present invention provides the following.

[1] A composition comprising a component (A) that is at least one selected from a thermoplastic resin and a thermoplastic elastomer and a component (B) that is an iron-based inorganic filler at a mass ratio (component (A)/component (B)) in a range of 5/95 to 80/20, and comprising a component (C) that is at least one selected from a phosphite-based compound and a phosphate-based compound in an amount not exceeding 5 parts by mass relative to 100 parts by mass in total of the component (A) and the component (B).

[2] The composition according to [1], wherein ΔMFR determined by the following formula as measured in accordance with ISO 1133 is 50 g/10 min or less:

ΔMFR = (MFR in retention for 20 minutes) - (MFR in retention for 5 minutes)

wherein the MFR in retention for 20 minutes is a melt flow rate measured with a preheating time of 20 minutes, and the MFR in retention for 5 minutes is a melt flow rate measured with a preheating time of 5 minutes; and the melt flow rate is measured under a load of 2160 g and at a temperature higher by 25°C than a melting point of the component (A).

[3] The composition according to [1] or [2], wherein the component (A) comprises at least one selected from the group consisting of a polyester-based resin, a polyester elastomer, a polycarbonate-based resin, a polyamide-based resin, a polyphenylene sulfide-based resin, and a polyolefin-based resin.

[4] The composition according to any one of [1] to [3], wherein the component (C) is at least one selected from the group consisting of a compound represented by the following formula (C1-1), a compound represented by the following formula (C1-2), and a compound represented by the following formula (C2-1):

[Chemical 1]

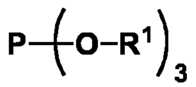

(C1-1)

wherein $R^1$ represents an aliphatic hydrocarbon group having 1 to 30 carbon atoms or an aromatic hydrocarbon group having 6 to 30 carbon atoms,

[Chemical 2]

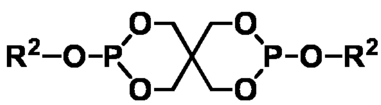

(C1-2)

wherein $R^2$ represents an aliphatic hydrocarbon group having 1 to 30 carbon atoms or an aromatic hydrocarbon group having 6 to 30 carbon atoms,

[Chemical 3]

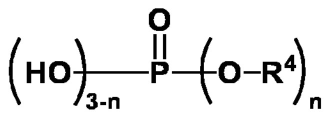

(C2-1)

wherein $R^4$ represents an aliphatic hydrocarbon group having 1 to 30 carbon atoms, and n is 1 or 2.

[5] The composition according to any one of [1] to [4], wherein the component (B) is at least one selected from the group consisting of iron metal, an alloy of iron with other element(s), and an ionic iron-containing compound, and the alloy of iron with other element(s) is any one of Fe-C alloy, Fe-Cr alloy, Fe-Cr-Mo alloy, Fe-Cr-Al alloy, Fe-Cr-Si alloy, Fe-Mn alloy, Fe-Mn-Mo alloy, Fe-Ni alloy, Fe-Ni-Cr alloy, Fe-Ni-Co alloy, Fe-Co alloy, Fe-Si alloy, and Fe-Si-Al alloy.

[6] A molded article comprising a component (A) that is at least one selected from a thermoplastic resin and a thermoplastic elastomer and a component (B) that is an iron-based inorganic filler at a mass ratio (component (A)/component (B)) in a range of 5/95 to 80/20, and comprising a component (C) that is at least one selected from a phosphite-based compound and a phosphate-based compound in an amount not exceeding 5 parts by mass relative to 100 parts by mass in total of the component (A) and the component (B).

[7] The molded article according to [6] having a gate mark.

## ADVANTAGEOUS EFFECTS OF THE INVENTION

According to the present invention, a composition in which an increase in fluidity when the composition is heated is suppressed can be obtained by mixing a specific amount of (C) at least one selected from a phosphite-based compound and a phosphate-based compound with (A) at least one selected from a thermoplastic resin and a thermoplastic elastomer and (B) an iron-based inorganic filler. Furthermore, according to the present invention, it may be possible to improve the mechanical properties of a molded article obtained from the composition.

In addition, by selecting a specific compound as (C) at least one selected from a phosphite-based compound and a phosphate-based compound, a composition capable of further improving the mechanical properties of a molded article obtained therefrom can be obtained.

## DESCRIPTION OF EMBODIMENTS

The embodiments of the present invention will be described in detail below. However, the present invention is not limited to the following embodiments, and modifications may be made as appropriate within the scope of the invention's objectives. When there are overlapping explanations, the corresponding descriptions may be omitted as necessary, but such omissions do not limit the gist of the invention.

[Component (A)]

In the composition of the present invention, the component (A) used as a base component (matrix component) is at least one selected from a thermoplastic resin and a thermoplastic elastomer.

The thermoplastic resin is not particularly limited, but typical examples thereof include a polyester-based resin, a polycarbonate-based resin, a polyamide-based resin, a polyphenylene sulfide-based resin, and a polyolefin-based resin. These thermoplastic resins may be used alone or in combination of two or more.

The thermoplastic elastomer is not particularly limited, but typical examples thereof include a polyester elastomer.

The component (A) may be used alone or in combination of two or more kinds.

Among the examples given as the component (A), particularly, a resin and/or an elastomer having an ester skeleton and/or an amide skeleton in repeating portions of its main chain (hereinafter referred to as an ester-amide-based resin and/or elastomer) such as a polyester-based resin, a polyester elastomer, a polycarbonate-based resin, and a polyamide-based resin are preferable, and a resin and/or an elastomer having an ester skeleton in repeating portions of its main chain (hereinafter referred to as an ester-based resin and/or elastomer) are more preferable. When the component (A) (particularly, an ester-amide-based resin and/or elastomer) is melt-kneaded with an iron-based inorganic filler as the component (B), the fluidity of the resulting mixture is easily increased by heating. However, in the present invention, the coexistence of at least one selected from a phosphite-based compound and a phosphate-based compound, which is the component (C), with the component (A) and the component (B) permits suppression of the increase in fluidity.

The component (A) is preferably an ester-amide-based resin and/or elastomer, more preferably at least one selected from the group consisting of a polyester-based resin (excluding a liquid crystal polyester-based resin), a

polyamide-based resin, and a polyester elastomer, further preferably at least one selected from the group consisting of a polyester-based resin (excluding a liquid crystal polyester-based resin) and a polyester elastomer, and particularly preferably a polyester-based resin (excluding a liquid crystal polyester-based resin). A polyester-based resin (excluding a liquid crystal polyester-based resin) and a polyester elastomer have low water absorbency and are useful for improving the dimensional stability of a molded article obtained.

The polyester-based resin is preferably an aromatic polyester resin having an aromatic dicarboxylic acid unit and a diol unit as constituent units.

The aromatic dicarboxylic acid serving as the constituent units is not particularly limited, but specific examples thereof include benzenedicarboxylic acid such as terephthalic acid, isophthalic acid, and orthophthalic acid; naphthalenedicarboxylic acid such as 2,6-naphthalenedicarboxylic acid and 1,5-naphthalenedicarboxylic acid; a compound having two carboxyphenyl groups, such as 1,2-bis(phenoxy)ethane-p,p'-dicarboxylic acid and diphenyl-p,p-dicarboxylic acid; and functional derivatives thereof. These aromatic dicarboxylic acids may be used alone or in combination of two or more. Preferred examples of the aromatic dicarboxylic acid serving as the constituent units include terephthalic acid, isophthalic acid, 2,6-naphthalenedicarboxylic acid, and diphenyl-p,p-dicarboxylic acid. These compounds as the constituent units tend to increase the crystallization rate and improve moldability. Particularly preferred examples thereof include benzenedicarboxylic acid such as terephthalic acid and isophthalic acid, and naphthalenedicarboxylic acid such as 2,6-naphthalenedicarboxylic acid.

The aromatic dicarboxylic acid unit is introduced, for example, by ester synthesis using an aromatic dicarboxylic acid, an aromatic dicarboxylic acid ester, or a salt thereof as a raw material. Examples of the aromatic dicarboxylic acid ester to be used as a raw material include a monoalkyl ester of an aromatic dicarboxylic acid, and a dialkyl ester of an aromatic dicarboxylic acid, and a dialkyl ester of an aromatic dicarboxylic acid is preferred. Preferred examples of the raw material include terephthalic acid, terephthalic acid dimethyl ester, isophthalic acid, isophthalic acid dimethyl ester, 2,6-naphthalenedicarboxylic acid, and 2,6-naphthalenedicarboxylic acid dimethyl ester.

Furthermore, in the aromatic polyester resin, a part of the aromatic dicarboxylic acid unit can be replaced with a dicarboxylic acid unit other than the aromatic dicarboxylic acid unit (hereinafter referred to as other dicarboxylic acid unit). Examples of the dicarboxylic acid other than the aromatic dicarboxylic acid serving as the other dicarboxylic acid unit include a saturated or unsaturated aliphatic dicarboxylic acid, a functional derivative of the aliphatic dicarboxylic acid, an alicyclic dicarboxylic acid, and a functional derivative of the alicyclic dicarboxylic acid. Examples of the aliphatic dicarboxylic acid include adipic acid, sebacic acid, succinic acid, glutaric acid, 1,10-decanedicarboxylic acid, and dimer acid. Examples of the alicyclic dicarboxylic acid include hexahydroterephthalic acid, hexahydroisophthalic acid, and cyclohexanedicarboxylic acid. The content of the other dicarboxylic acid unit is preferably less than 50 mol%, more preferably less than 40 mol%, and further preferably less than 30 mol%, in the total of the aromatic dicarboxylic acid unit and the other dicarboxylic acid unit (all dicarboxylic acid units). When the content is less than 50 mol%, the crystallinity of the polyester-based resin is good, and the moldability and heat resistance tend to become better.

The diol (unit) constituting the aromatic polyester is not particularly limited, but specific examples thereof include an aliphatic glycol such as alkylene glycol (for example, ethylene glycol, 1,3-propylene glycol, 1,4-butanediol, and 1,6-hexanediol); an alicyclic glycol such as 1,4-cyclohexanedimethanol and 1,4-cyclohexanediol; and an aromatic diol such as bisphenol A, hydroquinone, and 2,2-bis(4-β-hydroxyethoxyphenyl)propane. These diols (units) may be used alone or in combination of two or more.

The diol (unit) is preferably at least one selected from the group consisting of the aliphatic glycol and the alicyclic glycol, and more preferably an alkylene glycol having 2 to 8 carbon atoms. More specifically, the diol (unit) is at least one selected from the group consisting of ethylene glycol, 1,3-propylene glycol, 1,4-butanediol, 1,6-hexanediol, and 1,4-cyclohexanedimethanol, and more preferably ethylene glycol and/or 1,4-butanediol.

Specific examples of the aromatic polyester resin include polyethylene terephthalate, polypropylene terephthalate, polybutylene terephthalate, polycyclohexanedimethylene terephthalate, polyhexylene terephthalate, polyethylene naphthalate, polypropylene naphthalate, polybutylene naphthalate, a polyethylene isophthalate/terephthalate copolymer, a polypropylene isophthalate/terephthalate copolymer, a polybutylene isophthalate/terephthalate copolymer, a polyethylene terephthalate/naphthalate copolymer, a polypropylene terephthalate/naphthalate copolymer, a polybutylene terephthalate/naphthalate copolymer, a polybutylene terephthalate/decanedicarboxylate copolymer, a polyethylene terephthalate/cyclohexanedimethylene terephthalate copolymer, a polyethylene terephthalate/succinate copolymer, a polypropylene terephthalate/succinate copolymer, a polybutylene terephthalate/succinate copolymer, a polyethylene terephthalate/adipate copolymer, a polypropylene terephthalate/adipate copolymer, a polybutylene terephthalate/adipate copolymer, a polyethylene terephthalate/sebacate copolymer, a polypropylene terephthalate/sebacate copolymer, a polybutylene terephthalate/sebacate copolymer, a polyethylene terephthalate/isophthalate/adipate copolymer, a polypropylene terephthalate/isophthalate/adipate copolymer, a polybutylene terephthalate/isophthalate/succinate copolymer, a polybutylene terephthalate/isophthalate/adipate copolymer, a polybutylene terephthalate/isophthalate/sebacate copolymer, a bisphenol A/terephthalic acid polymer, a bisphenol A/isophthalic acid polymer, and a bisphenol A/terephthalic acid/isophthalic acid copolymer.

Furthermore, examples of the polyester-based resin also include a liquid crystal polyester-based resin. Examples of the liquid crystal polyester-based resin include a p-hydroxybenzoic acid/ethylene glycol/terephthalic acid copolymer, a hydroxynaphthoic acid/p-hydroxybenzoic acid copolymer, and a biphenol/benzoic acid/p-hydroxybenzoic acid copolymer.

The polyester-based resin is preferably an aromatic polyester resin other than a liquid crystal polyester-based resin. Among aromatic polyester resins other than a liquid crystal polyester-based resin, a polymer having an aromatic dicarboxylic acid and an alkylene glycol as constituent units is preferable, a polymer having an aromatic dicarboxylic acid and an alkylene glycol having 2 to 8 carbon atoms as constituent units is more preferable, and a polymer having terephthalic acid and an alkylene glycol having 2 to 8 carbon atoms as constituent units is further preferable. From the viewpoint of heat resistance and moldability, at least one selected from the group consisting of polyethylene terephthalate (PET) and polybutylene terephthalate (PBT) is preferable, and polybutylene terephthalate (PBT) is particularly preferable.

The polyester-based resin has an intrinsic viscosity of preferably 0.5 to 1.8 dl/g, and more preferably 0.6 to 1.5 dl/g. When the polyester-based resin has an intrinsic viscosity of the predetermined value or more, the durability can be increased, and when the polyester-based resin has an intrinsic viscosity of the predetermined value or less, the processability in injection molding and the like can be improved.

The polyester elastomer is preferably a polyester elastomer in which a hard segment composed of a polyester having an aromatic dicarboxylic acid and an aliphatic glycol and/or alicyclic glycol as constituent units and at least one soft segment selected from an aliphatic polyether, an aliphatic polyester, and an aliphatic polycarbonate are bonded to each other.

Examples of the aromatic dicarboxylic acid constituting the hard segment polyester include the aromatic dicarboxylic acid units mentioned as examples of the above-mentioned aromatic polyester resin, and the preferred embodiments thereof are also the same. As with the above-mentioned aromatic polyester resin, a dicarboxylic acid other than the aromatic dicarboxylic acid may be contained as constituent units, and the preferred embodiments thereof are also the same as those mentioned above.

Examples of the aliphatic glycol and the alicyclic glycol constituting the hard segment polyester include the aliphatic glycols and the alicyclic glycols mentioned as examples of the above-mentioned aromatic polyester resin, and the preferred embodiments thereof are also the same.

The hard segment is preferably a polyester having an aromatic dicarboxylic acid and an alkylene glycol having 2 to 8 carbon atoms as constituent units, and more preferably a polyester having terephthalic acid and an alkylene glycol having 2 to 8 carbon atoms as constituent units. From the viewpoint of heat resistance and moldability, at least one selected from the group consisting of polyethylene terephthalate (PET) and polybutylene terephthalate (PBT) is preferable, and polybutylene terephthalate (PBT) is particularly preferable.

When an aromatic polyester suitable for use as the polyester constituting the hard segment is produced beforehand and then copolymerized with a soft segment component, the aromatic polyester can be easily prepared in accordance with a typical polyester production method. Such a polyester preferably has a number average molecular weight of 10000 to 40000.

Examples of the aliphatic polyether constituting the soft segment of the polyester elastomer include a polyether having one or more alkanediols having 2 to 10 carbon atoms as constituent units, such as polyoxyethylene glycol, polyoxypropylene glycol, polyoxytetramethylene glycol, polyoxyhexamethylene glycol, polyoxytrimethylene glycol, a copolymer of ethylene oxide with propylene oxide, an ethylene oxide adduct of polyoxyethylene glycol, and a copolymer of ethylene oxide with tetrahydrofuran. The aliphatic polyether has a number average molecular weight of, for example, 300 to 5000, preferably 500 to 4000, and more preferably 700 to 2500.

Examples of the aliphatic polyester constituting the soft segment include an aliphatic polyester having ester groups and alkylene groups having 2 to 12 carbon atoms that are repeated, such as poly(ε-caprolactone), polyenantholactone, polycaprylolactone, and polybutylene adipate. The aliphatic polyester has a number average molecular weight of, for example, 300 to 5000, preferably 500 to 4000, and more preferably 700 to 2000.

The aliphatic polycarbonate constituting the soft segment may be a resin composed of a carbonic acid unit and an aliphatic diol unit, and the aliphatic diol is preferably an aliphatic diol having 2 to 12 carbon atoms. Examples of the aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. In particular, an aliphatic diol having 5 to 12 carbon atoms is preferable from the viewpoint of flexibility and low-temperature characteristics of a polyester elastomer to be obtained. These components may be used alone or in combination of two or more as needed. The aliphatic polycarbonate has a number average molecular weight of, for example, 300 to 15000, and preferably 500 to 13000.

In the polyester elastomer, the composition ratio of the hard segment to the soft segment (hard segment/soft segment) is preferably 40/60 to 95/5, more preferably 50/50 to 95/5, and further preferably 55/45 to 90/10, on a mass basis.

The polyester elastomer has a reduced viscosity of preferably 0.5 dl/g or more and 3.5 dl/g or less, more preferably 1.0 dl/g or more and 3.0 dl/g or less, and further preferably 1.1 dl/g or more and 2.8 dl/g or less. When the

polyester elastomer has a reduced viscosity of the predetermined value or more, the durability can be improved, and when the polyester elastomer has a reduced viscosity of the predetermined value or less, the processability in injection molding and the like can be improved.

The polyester elastomer preferably has an acid value of 5 to 200 eq/ton, and more preferably 10 to 80 eq/ton.

The polyester elastomer preferably has a Shore D hardness of 25 to 75, and more preferably 25 to 65.

The polycarbonate-based resin is not particularly limited as long as it is a resin composed of a carbonic acid unit and a diol unit, and examples thereof include an aromatic polycarbonate resin having a carbonic acid unit and an aromatic diol unit as constituent units, an aliphatic polycarbonate resin having a carbonic acid unit and an aliphatic diol unit as constituent units, and an aromatic-aliphatic polycarbonate resin having a carbonic acid unit, an aromatic diol unit and an aliphatic diol unit as constituent units.

Examples of the aromatic diol constituting the polycarbonate-based resin include the same compounds as the aromatic diols mentioned as the constituent units of the polyester-based resin.

Examples of the aliphatic diol constituting the polycarbonate-based resin include the same compounds as the aliphatic diols mentioned as the constituent units of the aliphatic polycarbonate constituting the soft segment of the polyester elastomer.

The polyamide-based resin is a resin obtained from (i) an amino acid, (ii) a lactam, or (iii) a diamine and a dicarboxylic acid, as main raw materials. The polyamide-based resin can be produced by polycondensation of an amino acid, by ring-opening polymerization of a lactam, or by polycondensation of a diamine and a dicarboxylic acid. The content of the amino acid, lactam, diamine and dicarboxylic acid in the raw materials constituting the polyamide resin is preferably 50 mol% or more, more preferably 70 mol% or more, and further preferably 85 mol% or more.

Examples of the amino acid include an amino aliphatic carboxylic acid having about 4 to 15 carbon atoms such as 6-aminocaproic acid, 11-aminoundecanoic acid, and 12-aminododecanoic acid; and an amino aromatic carboxylic acid such as p-aminomethylbenzoic acid.

Examples of the lactam include an aliphatic lactam having about 5 to 15 carbon atoms such as ε-caprolactam and ω-laurolactam.

Examples of the diamine include tetramethylenediamine, hexamethylenediamine, nonamethylenediamine, decamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, m-xylylenediamine, p-xylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, and bis(aminopropyl)piperazine.

Examples of the dicarboxylic acid include adipic acid, suberic acid, azelaic acid, sebacic acid, dodecanedioic acid, terephthalic acid, isophthalic acid, naphthalenedicarboxylic acid, 2-chloroterephthalic acid, 2-methylterephthalic acid, 5-methylisophthalic acid, sodium 5-sulfoisophthalate, hexahydroterephthalic acid, hexahydroisophthalic acid, and diglycolic acid.

Specific examples of the polyamide-based resin include polyamide 6, polyamide 66, polyamide 46, polyamide 11, polyamide 12, polyamide 610, polyamide 69, polyamide 6T, polyamide 9T, polyamide MXD6, a polyamide 6/66 copolymer, a polyamide 6/610 copolymer, a polyamide 6/6T copolymer, a polyamide 6/66/610 copolymer, a polyamide 6/12 copolymer, a polyamide 6T/12 copolymer, a polyamide 6T/66 copolymer, a polyamide 6/6I copolymer, a polyamide 66/6I/6 copolymer, a polyamide 6T/6I copolymer, a polyamide 6T/6I/66 copolymer, a polyamide 6/66/610/12 copolymer, and a polyamide 6T/M-5T copolymer. Among these, from the viewpoint of chemical resistance and impact-resistance of a molded article obtained and flowability, at least one selected from the group consisting of polyamide 6, polyamide 66, polyamide 12, and a copolymer containing at least one of these as a main component are preferable, at least one selected from the group consisting of polyamide 6 and a copolymer containing polyamide 6 and at least one of these as a main component are more preferable. In this specification, a "copolymer containing A as a main component" indicates a copolymer having a structure derived from A at a ratio of preferably 50 mol% or more, more preferably 70 mol% or more, and further preferably 85 mol% or more.

The relative viscosity of the polyamide-based resin measured in a 98% sulfuric acid solution (polyamide-based resin concentration: 1 g/dl, temperature: 20°C) is preferably 1.5 to 3.5, more preferably 2.0 to 3.0, and further preferably 2.2 to 2.8.

The polyphenylene sulfide-based resin is not particularly limited, and any commonly used polyphenylene sulfide-based resin can be used. Specific examples thereof include poly(p-phenylene sulfide), polyphenylene sulfide sulfone, polyphenylene sulfide ketone, and polyphenylene sulfide ether.

Specific examples of the polyolefin-based resin include a homopolymer or copolymer containing repeating units generated from an α-olefin such as ethylene and propylene as a main component, such as a homopolymer of propylene, a homopolymer of ethylene, and a block or random copolymer in which ethylene and other α-olefins (e.g., propylene and buten-1) are copolymerized. One or more of these can be used to the extent that they contribute to properties of the resin material. The polyolefin-based resin used in the present invention may be linear or branched. The polyolefin-based resin is

preferably at least one selected from the group consisting of a polyethylene-based resin containing a constituent unit derived from ethylene as a main component and a polypropylene-based resin containing a constituent unit derived from propylene as a main component. As the polypropylene-based resin, any of polypropylene-based resins such as isotactic, atactic, and syndiotactic polypropylenes can be also used. Examples of the polyethylene-based resin include a linear low-density polyethylene (LLDPE), a low-density polyethylene (LDPE), a high-density polyethylene (HDPE), an ultralow-density polyethylene (ULDPE), an ultrahigh-molecular weight polyethylene (UHMW-PE).

The component (A) has a melting point of, for example, 100 to 350°C, preferably 130 to 300°C, more preferably 150 to 250°C, and particularly preferably 160 to 240°C.

The water content in the component (A) is, for example, 200 ppm or less, preferably 170 ppm or less, and more preferably 150 ppm or less. The water content in the component (A) can be adjusted within the above-mentioned range, for example, by heating and drying the component (A).

The content of the component (A) is 5 to 80 parts by mass, preferably 20 to 80 parts by mass, and more preferably 25 to 75 parts by mass, based on 100 parts by mass in total of the component (A) and the component (B) in the composition of the present invention. In the composition of the present invention, an amount to be added (addition ratio) of each of raw material components will be, as it is, a content (content ratio) in the composition and a content (content ratio) in the molded article.

[Component (B)]

In the composition of the present invention, an iron-based inorganic filler is mixed as a component (B). As the component (B), a known iron-containing inorganic filler can be used depending on the purposes of increasing a specific gravity and the like. Examples of the component (B) include iron metal, an alloy of iron with other element(s) (hereinafter sometimes referred to as an iron-based alloy), and an iron-containing compound (preferably an ionic iron-containing compound).

The iron metal is preferably pure iron.

Depending on the application purpose, the iron-based alloy may be an alloy of iron with other metallic element(s), or an alloy of iron with a non-metallic element. Specific examples of the iron-based alloy that can be used, in terms of iron and the elements contained mainly in it, include Fe-C alloy, Fe-Cr alloy, Fe-Cr-Mo alloy, Fe-Cr-Al alloy, Fe-Cr-Si alloy, Fe-Mn alloy, Fe-Mn-Mo alloy, Fe-Ni alloy, Fe-Ni-Cr alloy, Fe-Ni-Co alloy, Fe-Co alloy, Fe-Si alloy, and Fe-Si-Al alloy. The iron concentration in the iron-based alloy is, for example, 50% by mass or more, preferably 70% by mass or more, and more preferably 80% by mass or more.

As the iron-containing compound, a compound containing divalent or trivalent iron (ionic iron), such as iron oxide, iron hydroxide, iron chloride, iron sulfide, and iron sulfate, can be used.

These iron-based inorganic fillers may be used alone or in combination of two or more.

The form of the component (B) is not particularly limited, but the component (B) is preferably in powder form. Examples of iron metal in powder form include reduced iron powder, carbonyl iron powder, and atomized iron powder derived from pure iron. Carbonyl iron powder is preferred for its high purity. The iron-based alloy in powder form may be, for example, atomized iron powder derived from an iron-based alloy, and may be partially alloyed iron powder in which pure iron powder and iron-based alloy powder are adhered to each other.

When the component (B) is in powder form, the average particle diameter D50 of the component (B) is, for example, 1 to 50 μm, and preferably 1 to 15 μm, more preferably 1 to 12 μm, and further preferably 1 to 10 μm. In the present invention, the average particle diameter D50 indicates a particle diameter at a value of 50% in terms of cumulative volume.

The component (B) may or may not be surface-treated with a surface treatment agent. Examples of the surface treatment agent include phosphoric acid and a silane coupling agent.

The content of the component (B) is 20 to 95 parts by mass, preferably 20 to 80 parts by mass, and more preferably 25 to 75 parts by mass, based on 100 parts by mass in total of the component (A) and the component (B) in the composition of the present invention. In the composition of the present invention, an amount to be added (addition ratio) of each of raw material components will be, as it is, a content (content ratio) in the composition and a content (content ratio) in the molded article.

The mass ratio of the component (A) to the component (B) (component (A)/component (B)) contained in the composition of the present invention is in the range of 5/95 to 80/20, preferably in the range of 20/80 to 80/20, and more preferably in the range of 25/75 to 75/25.

[Component (C)]

The composition of the present invention contains, as a component (C), at least one selected from a phosphite-based compound and a phosphate-based compound. The component (C) used in the present invention is not particularly

limited so long as it is at least one selected from a phosphite-based compound and a phosphate-based compound.

The phosphite-based compound (also called a phosphite ester compound) is a compound containing one or more phosphorus atoms with three bonds, in which s number of -OH groups, t number of -$OR^a$ groups, and u number of -O-$R^b$-groups (in the -O-$R^b$- group, -O- is bonded to a phosphorus atom, and $R^b$ is bonded to another phosphorus atom via another -O-) are bonded to each of the phosphorus atoms, provided that s+t+u=3, t is 1 or more, and u is 0 when only one phosphorus atom is contained in one molecule of the phosphite-based compound, and u is 1 or 2 when two or more phosphorus atoms are contained in one molecule of the phosphite-based compound. When two or more phosphorus atoms are contained in one molecule, each s, each t, and each u may be different for each phosphorus atom, but are preferably the same. s is preferably 0. The number of phosphorus atoms in one molecule of the phosphite-based compound is preferably 1 to 4, more preferably 1 or 2, and particularly preferably 2.

Examples of $R^2$ include the same groups as $R^1$ to $R^3$ described later. When the phosphite-based compound contains a plurality of $R^a$s, they may be different from each other, but are preferably the same.

Examples of $R^b$ include divalent to hexavalent, preferably divalent to tetravalent, hydrocarbon groups having 1 to 20 carbon atoms, and all bonds of $R^b$ are bonded to phosphorus atoms via -O-. Examples of the hydrocarbon group represented by $R^b$ include an aliphatic hydrocarbon group, an aromatic hydrocarbon group, a group in which an aliphatic hydrocarbon group and an aromatic hydrocarbon group are combined, and a group in which two or more aromatic hydrocarbon groups are combined.

The phosphite-based compound is preferably a compound in which the above-mentioned s is 0 (which is a fully esterified compound), more preferably at least one selected from the group consisting of compounds represented by the following formulae (C1-1) to (C1-3), and further preferably a compound represented by the following formula (C1-1) and/or a compound represented by the following formula (C1-2).

[Chemical 4]

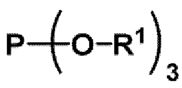

(C1-1)

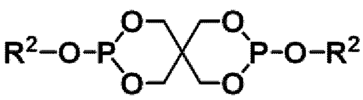

(C1-2)

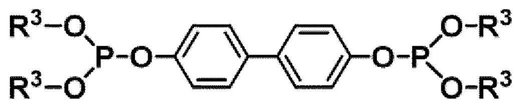

(C1-3)

In the formulae, $R^1$ to $R^3$ each represent an aliphatic hydrocarbon group having 1 to 30 carbon atoms or an aromatic hydrocarbon group having 6 to 30 carbon atoms.

In the formula (C1-1), a plurality of $R^1$s may be the same or different, but are preferably the same. In the formula (C1-2), a plurality of $R^2$s may be the same or different, but are preferably the same. In the formula (C1-3), a plurality of $R^3$s may be the same or different, but are preferably the same.

Each of the aliphatic hydrocarbon group represented by $R^1$ to $R^3$ preferably has 2 to 25 carbon atoms, more preferably 8 to 23 carbon atoms, and further preferably 12 to 20 carbon atoms.

Each of the aliphatic hydrocarbon group represented by $R^1$ to $R^3$ may be a saturated aliphatic hydrocarbon group or an unsaturated aliphatic hydrocarbon group, but is preferably a saturated aliphatic hydrocarbon group. Each of the aliphatic hydrocarbon group represented by $R^1$ to $R^3$ may be linear or branched, but is preferably linear. Examples of the aliphatic hydrocarbon group include a saturated aliphatic hydrocarbon group such as a methyl group, an ethyl group, an n-propyl group, an n-butyl group, a 2-ethylhexyl group, an n-dodecyl group, an n-tetradecyl group, an n-hexadecyl group, an n-octadecyl group, and an n-icosyl group; and an unsaturated aliphatic hydrocarbon group such as an ethenyl group, a propenyl group, a butenyl group, a dodecenyl group, a tetradecenyl group, a hexadecenyl group, an octadecenyl group, and an icosenyl group.

Each of the aromatic hydrocarbon groups represented by $R^1$ to $R^3$ preferably has 6 to 25 carbon atoms, more preferably 7 to 23 carbon atoms, and further preferably 10 to 20 carbon atoms.

Examples of the aromatic hydrocarbon group represented by $R^1$ to $R^3$ include an aryl group such as a phenyl group and a naphthyl group; and an alkylaryl group where 1 to 5 alkyl groups, each having 1 to 4 carbon atoms, are bonded to an aryl group.

In order to further enhance the effect of suppressing an increase in fluidity when the composition is heated, $R^1$ to $R^3$ are preferably an aromatic hydrocarbon group having 6 to 30 carbon atoms, more preferably an aromatic hydrocarbon group having 6 to 20 carbon atoms, and further preferably a phenyl group or a group where 1 to 5 alkyl groups, each having 1 to 4 carbon atoms, are bonded to a phenyl group.

In particular, when $R^1$ is an aromatic hydrocarbon group, the $R^1$ is preferably a phenyl group or a group where 1 to 3 alkyl groups, each having 1 to 4 carbon atoms, are bonded to a phenyl group.

When $R^2$ and $R^3$ are aromatic hydrocarbon groups, the $R^2$ and $R^3$ are each preferably a group where 1 to 5 alkyl groups, each having 1 to 4 carbon atoms, are bonded to a phenyl group, and more preferably a group where at least 1 to 3 t-butyl groups are bonded to a phenyl group. The bonding position of the alkyl group having 1 to 4 carbon atoms (preferably the t-butyl group) that is bonded to the phenyl group is not particularly limited, but it is preferable that the alkyl group be bonded to any of the 2-position, 2,4-position, 2,6-position, or 2,4,6-position with respect to the bond to -O-P of the phenyl group.

Specific examples of the phosphite-based compound include a compound represented by the formula (C1-1) such as triphenyl phosphite, tris(p-cresyl) phosphite, tris(4-tert-butylphenyl)phosphite, trisnonylphenyl phosphite, trilauryl phosphite, trioleyl phosphite, diphenyl mono(2-ethylhexyl)phosphite, tristearyl phosphite, and tris(2,4-di-t-butylphenyl) phosphite; a compound represented by the formula (C1-2) such as bis(2,4-di-t-butylphenyl)pentaerythritol diphosphite, bis(2,4,6-tri-t-butylphenyl)pentaerythritol diphosphite, bis(2,6-di-t-butyl-4-methylphenyl)pentaerythritol diphosphite, and distearyl pentaerythritol diphosphate; and a compound represented by the formula (C1-3) such as tetrakis(2,4-di-t-butylphenyl)-4,4'-biphenylene diphosphate.

The phosphate-based compound (also called a phosphoric acid ester compound) is a compound containing one or more P=O structures with three bonds on a phosphorus atom, in which the phosphorus atom of each P=O structure is bonded to s number of -OH groups, t number of $-OR^a$ groups, and u number of $-O-R^b-$ groups (in the $-O-R^b-$ groups, -O- is bonded to a phosphorus atom of P=O structure; $R^b$ is bonded to a phosphorus atom of another P=O structure via another -O-), provided that s+t+u=3, t is 1 or more, and u is 0 when only one P=O structure is contained, and u is 1 or 2 when two or more P=O structures are contained. When two or more P=O structures are contained, each s, each t, and each u may be different for each P=O structures, but are preferably the same. s is preferably 1 or 2. $R^a$ and $R^b$ are the same as mentioned above. The number of P=O structures in one molecule of the phosphate-based compound is preferably 1 or 2, and more preferably 1.

The phosphate-based compound is preferably a compound represented by the following formula (C2).

[Chemical 5]

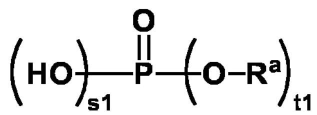

(C2)

In the formula (C2), s1 represents an integer from 0 to 2, t1 represents an integer from 1 to 3, and $R^a$ is the same as previously defined. However, s1 and t1 must satisfy the equation s1 + t1 = 3.

When the formula (C2) contains a plurality of $R^a$s, they may be either the same or different, but are preferably the same.

s1 is preferably 1 or 2.

The compound represented by the formula (C2) may be a compound in which each $R^a$ is an aromatic hydrocarbon group having 6 to 30 carbon atoms (hereinafter sometimes referred to as an aromatic phosphoric acid ester compound), or a compound in which each $R^a$ is an aliphatic hydrocarbon group having 1 to 30 carbon atoms (hereinafter sometimes referred to as an aliphatic phosphoric acid ester compound), but it is preferably an aliphatic phosphoric acid ester compound, more preferably the compound in which s1 is 1 or 2 (acid-type compound), and further preferably a compound represented by the following formula (C2-1).

[Chemical 6]

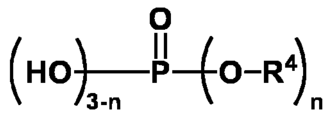

(C2-1)

In the formula (C2-1), $R^4$ represents an aliphatic hydrocarbon group having 1 to 30 carbon atoms, and n is 1 or 2.

When the formula (C2-1) contains a plurality of $R^4$s, they may be either the same or different, but are preferably the same.

The aliphatic hydrocarbon group represented by $R^4$ preferably has 1 to 25 carbon atoms, more preferably 2 to 23 carbon atoms, and further preferably 2 to 20 carbon atoms. In particular, by using the phosphate-based compound in which $R^4$ is an aliphatic hydrocarbon group having 1 to 10 carbon atoms (preferably 1 to 8 carbon atoms, more preferably 1 to 5 carbon atoms), the effect of suppressing an increase in fluidity when the composition is heated and the effect of improving the tensile strength of molded articles obtained can become more excellent. The content of the phosphate-based compound represented by the formula (C2-1) in which $R^4$ is an aliphatic hydrocarbon group having 1 to 10 carbon atoms (preferably 1 to 8 carbon atoms, more preferably 1 to 5 carbon atoms) in 100% by mass in total of the component (C) is preferably 20% by mass or more, more preferably 40% by mass or more, further preferably 50% by mass or more, and

particularly preferably 80% by mass or more, and may be 100% by mass.

Furthermore, by using the phosphate-based compound in which $R^4$ has 8 to 23 or 12 to 20 carbon atoms, the effect of improving the tensile elongation of molded articles obtained can become more excellent.

Examples of the aliphatic hydrocarbon group represented by $R^4$ include the same groups as those mentioned as the aliphatic hydrocarbon groups represented by $R^1$ to $R^3$. Among these, a linear aliphatic hydrocarbon group is preferable, and a linear saturated aliphatic hydrocarbon group is more preferable.

n may be 1 or 2, and a mixture of the compound in which n is 1 and the compound in which n is 2 may be used.

Specific examples of the phosphate-based compound include mono- or dimethyl acid phosphate, mono- or di-ethyl acid phosphate, mono- or di-butyl acid phosphate, mono- or di-2-ethylhexyl phosphate, mono- or di-lauryl acid phosphate, mono- or di-stearyl acid phosphate, and mono- or di-oleyl acid phosphate. These phosphate-based compounds may be used alone or in combination of two or more. The phosphate-based compound is preferably at least one selected from the group consisting of mono-ethyl acid phosphate, di-ethyl acid phosphate, mono-stearyl acid phosphate, and di-stearyl acid phosphate.

As the phosphate-based compound, commercially available products may be used, such as LBT-1830 and LBT-1813 manufactured by Sakai Chemical Industry Co., Ltd., JP-502 manufactured by Johoku Chemical Co., Ltd., and ADK STAB AX-71 manufactured by ADEKA Corporation.

As the component (C), one kind may be used alone, or two or more kinds may be used in combination.

The component (C) is preferably at least one selected from the phosphate-based compounds.

Furthermore, the component (C) is preferably at least one selected from the group consisting of the compound represented by the formula (C1-1), the compound represented by the formula (C1-2), and the compound represented by the formula (C2-1). The use of such compounds allows suppression of an increase in fluidity when the composition is heated to be further improved. In order to further improve the effect of suppressing an increase in fluidity when the composition is heated, the component (C) is preferably at least one selected from a phosphite-based compound represented by the formula (C1-1) in which $R^1$ is an aromatic hydrocarbon group having 6 to 30 carbon atoms (preferably 6 to 20 carbon atoms), a phosphite-based compound represented by the formula (C1-2) in which $R^2$ is an aromatic hydrocarbon group having 6 to 30 carbon atoms (preferably 6 to 20 carbon atoms), and a phosphate-based compound represented by the formula (C2-1) in which $R^4$ is an aliphatic hydrocarbon group having 1 to 30 carbon atoms (preferably 1 to 25 carbon atoms), and is more preferably at least one selected from a phosphite-based compound represented by the formula (C1-1) in which $R^1$ is an aromatic hydrocarbon group having 6 to 30 carbon atoms (preferably 6 to 20 carbon atoms) and a phosphate-based compound represented by the formula (C2-1) in which $R^4$ is an aliphatic hydrocarbon group having 1 to 10 carbon atoms (preferably 1 to 8 carbon atoms, more preferably 1 to 5 carbon atoms). Although the detailed mechanism of this has not yet been clarified, it is inferred that there may be an influence due to the action of the surface coating onto the component (B).

In the present invention, the content of the component (C) is 5 parts by mass or less, preferably 0.02 to 1.4 parts by mass, more preferably 0.03 to 1.2 parts by mass, particularly preferably 0.03 to 1.0 part by mass, and most preferably 0.1 to 1.0 part by mass, relative to 100 parts by mass in total of the component (A) and the component (B). It can be assumed that the component (C) serves as a surface coating onto the component (B). In particular, when the component (C) has a structure such as P-OH, P-$OR^a$, P-O-$R^b$-, or P=O, it can be assumed that the component (C) is more likely to be coordinated to the surface of the component (B), making it easier to form the surface coating. By forming such a surface coating, the effect of improving the dispersibility of the component (B) and the effect of suppressing the deterioration behavior of the resin or elastomer due to the component (B) can be attained. Therefore, according to the composition of the present invention, not only an increase in fluidity when heated is suppressed, but also the mechanical properties may be improved. When the above content is 0.02 parts by mass or more, the desired properties are further improved. On the other hand, when the above content is more than 5 parts by mass, the component (C) begins to act as a plasticizer. Therefore, the desired properties can be further improved by adjusting the above content to be 5 parts by mass or less, particularly 1.4 parts by mass or less.

In addition, the content of the component (C) is, for example, 0.01 to 10 parts by mass, preferably 0.03 to 5 parts by mass, more preferably 0.04 to 3 parts by mass, further preferably 0.05 to 2.5 parts by mass, and particularly preferably 0.05 to 1.5 parts by mass, relative to 100 parts by mass of the component (B).

The total content of the components (A), (B), and (C) in the composition of the present invention is preferably 90% by mass or more, more preferably 95% by mass or more, and further preferably 98% by mass or more, and may be 100% by mass or may be 99.5% by mass or less.

[Other Component(s)]

The composition of the present invention may or may not further contain an additive such as an antioxidant, a heat-resistance stabilizer, an ultraviolet absorbing agent, an antistatic agent, a dye, a pigment, a lubricating agent, a plasticizer, a mold release agent, a crystallization accelerator, a crystalline nucleating agent, an epoxy compound, and a

particle dispersant, depending on the purpose. The amount of these various additives is preferably 10 parts by mass or less in total, more preferably 5 parts by mass or less in total, and further preferably 2 parts by mass or less in total, based on 100 parts by mass in total of the component (A) and the component (B).

The antioxidant is preferably a hindered phenol-based antioxidant. Specific examples thereof includes 3,5-di-t-butyl-4-hydroxytoluene, n-octadecyl-β-(4'-hydroxy-3',5'-di-t-butylphenyl)propionate, tetrakis[methylene-3-(3',5'-di-t-butyl-4'-hydroxyphenyl)propionate]methane, 1,3,5-trimethyl-2,4,6-tris(3',5'-di-t-butyl-4'-hydroxybenzyl)benzene, calcium (3,5-di-t-butyl-4-hydroxybenzyl-monoethyl-phosphate), triethylene glycol bis[3-(3-t-butyl-5-methyl-4-hydroxyphenyl) propionate], 3,9-bis[1,1-dimethyl-2-{8-(3-t-butyl-4-hydroxy-5-methylphenyl)propionyloxy}ethyl]2,4,8, 10-tetraoxaspiro [5,5]undecane, bis[3,3-bis(4'-hydroxy-3'-t-butylphenyl)butyric acid]glycol ester, 2,2'-ethylidenebis(4,6-dit-butylphenol), N,N'-bis[3-(3,5-di-t-butyl-4-hydroxyphenyl)propionyl]hydrazine, 2,2'-oxamidebis[ethyl-3-(3,5-di-t-butyl-4-hydroxyphenyl)propionate], 1,3,5-tris(3',5'-di-t-butyl-4'-hydroxybenzyl)-S-triazine-2,4,6(1H,3H,5H)-trione, 1,3,5-tris(4-t-butyl-3-hydroxy-2,6-dimethylbenzyl)isocyanurate, 3,5-di-t-butyl-4-hydroxyhydrocinnamic acid triester with-1,3,5-tris(2-hydroxyethyl)-S-triazine-2,4,6(1H,3H,5H), and N,N'-hexamethylenebis(3,5-di-t-butyl-4-hydroxybenzenepropionamide). These antioxidants may be used alone or in a mixture of two or more. The amount of the antioxidant is preferably 5 parts by mass or less, more preferably 3 parts by mass or less, and further preferably 1 part by mass or less, based on 100 parts by mass in total of the component (A) and the component (B).

Examples of the mold release agent include a long-chain fatty acid, an ester of the fatty acid, a metal salt of the fatty acid, an amide compound, a polyethylene wax, silicone, and polyethylene oxide. As the long-chain fatty acid, one having 12 or more carbon atoms is particularly preferred, and examples thereof include stearic acid, 12-hydroxystearic acid, behenic acid, and montanic acid. A part or the whole of carboxylic acid in the long-chain fatty acid may be esterified with monoglycol or polyglycol, or may form a metal salt. Examples of the amide compound include ethylene bis-terephthalamide and methylene bis-stearylamide. These mold release agents may be used alone or in a mixture of two or more. The amount of the mold release agent is preferably 5 parts by mass or less, more preferably 3 parts by mass or less, and further preferably 1 part by mass or less, based on 100 parts by mass in total of the component (A) and the component (B).

Examples of the particle dispersant include a fatty acid metal salt, a fatty acid ester, a fatty acid amide, and a low-molecular-weight polymer dispersant. The amount of the particle dispersant is preferably 5 parts by mass or less, more preferably 3 parts by mass or less, and further preferably 1 part by mass or less, based on 100 parts by mass in total of the component (A) and the component (B).

The composition of the present invention does not usually contain any components other than those mentioned above, but may contain them as necessary. Examples of the component include a thermosetting resin and a fiber component such as a glass fiber. For example, the thermosetting resin may be contained in an amount of 0.2% by mass or less in the composition of the present invention, and the fiber component may be contained in an amount of 4% by mass or less in the composition of the present invention.

The method for producing the composition of the present invention is not particularly limited, but for example, the composition can be obtained by dryblending the components (A), (B), and (C) as well as other component(s) used as necessary, and then melt-kneading the mixture with a single- or twin-screw melt kneader, or a typical mixer for thermoplastic resin, such as a kneading heater. Thereafter, if necessary, the resulting mixture may be subjected to a granulation step to prepare pellets. Furthermore, if necessary, the component (B) may be treated (mixed) with the component (C) in advance and then mixed with the component (A).

The composition of the present invention exhibits excellent mass productivity because it suppresses an increase in fluidity when heating. The ΔMFR of the composition of the present invention, determined by the following formula as measured in accordance with ISO 1133, is, for example, 80 g/10 min or less, preferably 50 g/10 min or less, more preferably 40 g/10 min or less, even more preferably 30 g/10 min or less, and may further be 20 g/10 min or less or even 10 g/10 min or less. The lower limit of the ΔMFR of the composition of the present invention is not particularly limited, but it may be 1 g/10 min or more.

$$\Delta MFR = (\text{MFR in retention for 20 minutes}) - (\text{MFR in retention for 5 minutes})$$

In the formula, the MFR in retention for 20 minutes is a melt flow rate measured with a preheating time of 20 minutes, and the MFR in retention for 5 minutes is a melt flow rate measured with a preheating time of 5 minutes. The melt flow rate is measured under a load of 2160 g and at a temperature higher by 25°C than a melting point of the component (A).

When the composition contains two or more components (A) having different melting points, the temperature higher by 25°C than the melting point of the component (A) having the highest melting point may be adopted as the above measurement temperature.

The above ΔMFR can be measured according to the method shown in Examples described later.

When producing a molded article from the composition of the present invention, a molding method of the

composition is not particularly limited, and injection molding, extrusion molding, press molding, blow molding, and the like can be performed. Injection molding is preferred because of a high degree of freedom in shape of a molded article obtained. The composition of the present invention easily exhibits excellent effects of suppressing an increase in fluidity when heated and improving the mechanical properties, particularly in injection molding. Therefore, it is preferable to subject the composition to injection molding.

The molded article produced from the composition of the present invention contains the component (A) and the component (B) at a mass ratio (component (A)/component (B)) in the range of 5/95 to 80/20, and contains the component (C) in an amount not exceeding 5 parts by mass relative to 100 parts by mass in total of the component (A) and the component (B). The molded article may also contain, as other component(s), the additive described above. The preferred types and amounts of each component contained in the molded article are the same as those mentioned above.

As described above, the composition of the present invention is preferably subjected to injection molding, that is, a molded article produced from the composition of the present invention preferably has a gate mark. The "gate mark" means a mark such as a concave or convex portion formed due to a gate for injecting the composition when the molded article is produced by injection molding.

The present application claims benefit of priority to Japanese Patent Application No. 2022-179002 filed on November 8, 2022. The entire contents of the specification of Japanese Patent Application No. 2022-179002 filed on November 8, 2022, are incorporated herein by reference.

EXAMPLES

Hereinafter, the present invention will be more specifically described with Examples. However, the scope of the present invention is not limited by Examples.

<Examples 1 to 19 and Comparative Examples 1 to 7>

In Examples 1 to 19 and Comparative Examples 1 to 7, the following raw materials were used as components of the compositions.

[Component (A)]

A-1: Polybutylene terephthalate, melting point: 225°C, resin drying temperature: 130°C (manufactured by Toyobo Co., Ltd., inherent viscosity=0.83 dl/g)
A-2: Polybutylene terephthalate, melting point: 225°C, resin drying temperature: 130°C (manufactured by Toyobo Co., Ltd., inherent viscosity=1.32 dl/g)
A-3: Polyester elastomer, melting point: 205°C, resin drying temperature: 100°C Copolymer having a composition ratio of PBT/HPCD=70/30 (% by mass)
(PELPRENE (registered trademark) manufactured by Toyobo Co., Ltd., reduced viscosity: 1.20 dl/g, Shore D hardness: 60)

The polyester elastomer (A-3) was produced by the following method. 70 parts by mass of polybutylene terephthalate (PBT) having a number average molecular weight of 30000 and 30 parts by mass of polycarbonate diol (HPCD) having a number average molecular weight of 10000 and containing a 1,6-hexanediol residue were stirred at 225°C to 245°C under 130 Pa for 1 hour to prepare a mixture. After the ester exchange reaction had progressed and the mixture was confirmed to turn transparent, the contents were taken out and cooled to obtain a polyester elastomer (A-3).

A-4: Polyester elastomer, melting point: 180°C, resin drying temperature: 100°C

Polyester elastomer of terephthalic acid (TPA)//1,4-butanediol (BD)/polyoxytetramethylene glycol (PTMG, number average molecular weight:

2000)=100//75/25 (mol%) (reduced viscosity: 2.50 dl/g, acid value: 21 eq/ton, Shore D hardness: 31)
A-5: Polyamide 6, melting point: 225°C, resin drying temperature: 100°C (manufactured by Toyobo Co., Ltd., relative viscosity=2.2)

The above melting point, intrinsic viscosity, reduced viscosity, Shore D hardness, acid value, and relative viscosity were measured using the following methods.

<Melting Point>

The melting point was determined using a DSC220 differential scanning calorimeter produced by Seiko Instruments Inc.. A measurement sample of 5 mg was placed in an aluminum pan, sealed with a pressed lid, and heated from 20°C to 270°C at a rate of 10°C/min under a nitrogen atmosphere. The endothermic peak due to melting in the obtained thermogram curve was taken as the melting point.

<Intrinsic Viscosity>

A sample of 0.1 g was dissolved in 25 ml of a mixed solvent of phenol/tetrachloroethane (mass ratio 6/4), and the intrinsic viscosity was measured at 30°C using a Ubbelohde viscometer. (Unit: dl/g)

<Reduced Viscosity>

A sample of 0.05 g was dissolved in 25 ml of a mixed solvent of phenol/tetrachloroethane (mass ratio 60/40), and the reduced viscosity was measured at 30°C using an Ostwald viscometer. (Unit: dl/g)

<Shore D Hardness>

The Shore D hardness was measured in accordance with JIS K7215 (-1986). The test piece used was a stack of three injection-molded products (length: 100 mm, width: 100 mm, thickness: 2 mm) prepared at a cylinder temperature of 240°C and a mold temperature of 50°C. The measurement was conducted using a durometer with a type-D indenter under a measurement pressure of 5000 g. The value at 5 seconds after the start of the measurement was defined as the D hardness (Shore D hardness).

<Acid Value>

A sample of 0.5 g was dissolved in 25 ml of benzyl alcohol and titrated using a 0.01 mol/l sodium hydroxide solution in benzyl alcohol. The indicator used was 0.10 g of phenolphthalein, dissolved in a mixture of 50 mL of ethanol and 50 mL of water.

<Relative Viscosity>

A polyamide resin of 0.25 g was dissolved in 25 ml of 98% sulfuric acid. Then, 10ml of this sample solution was placed in an Oswald viscosity tube and the efflux time was measured at 20°C. Separately, the solvent (98% sulfuric acid) was also placed in an Oswald viscosity tube and the efflux time was measured at 20°C. The relative viscosity was calculated using the following formula;

$$RV = T / T0$$

wherein RV represents relative viscosity, T represents efflux time of the sample solution, and T0 represents efflux time of the solvent.

[Component (B)]

B-1: DAP-410L (manufactured by Daido Steel Co., Ltd., Fe-Cr-Si alloy)
B-2: Carbonyl iron powder YW3 (manufactured by Tianyi Corporation)

[Component (C)]

C-1: "JP-502" (ethyl acid phosphate, $O=P(OC_2H_5)_n(OH)_{3-n}$, where n is 1 or 2) manufactured by Johoku Chemical Co., Ltd.
C-2: "ADK STAB AX-71" (stearyl acid phosphate, $O=P(OC_{18}H_{37})_n(OH)_{3-n}$, where n is 1 or 2) manufactured by ADEKA Corporation

C-3: "PEP-36" (bis(2,6-di-t-butyl-4-methylphenyl)pentaerythritol diphosphite) manufactured by Clariant Corporation
C-4: "JP-360" (triphenyl phosphite) manufactured by Johoku Chemical Co., Ltd.
C-5: "JP-318E" (tristearyl phosphite, $P(OC_{18}H_{37})$) manufactured by Johoku Chemical Co., Ltd.

[Other phosphorus compounds]

C-6: "PEP-Q" (tetrakis(2,4-di-tert-butylphenyl)-4,4'-biphenyl diphosphonate) (the compound of the following formula) manufactured by Clariant Corporation

[Chemical 7]

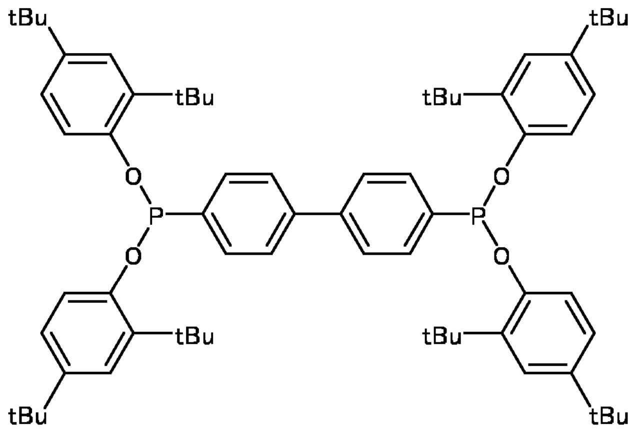

C-7: "JC-263" (triphenylphosphine) manufactured by Johoku Chemical Co., Ltd.
C-8: "Exolit OP 1240" (aluminum phosphinate) manufactured by Clariant Corporation

[Other Additives]

Antioxidant: IRGANOX1010, manufactured by BASF Corporation

Mold release agent: LICOWAX-OP, manufactured by Clariant Corporation

Components shown in Tables 1 to 3 were dry-blended at a ratio of contents (parts by mass) shown in Tables 1 to 3, and melt-kneaded using a twin-screw extruder (STS-35, manufactured by COPERION Corporation) under the conditions of a cylinder temperature set to a temperature higher by 25°C than the melting point of each component (A), a discharge rate of 20 kg/hr, and a screw rotation speed of 180 rpm to prepare pellets of each composition. The pellets obtained were used to perform the measurements described below. The measurement results of the compositions of Examples 1 to 19 and Comparative Examples 1 to 7 are shown in Tables 1 to 3.

<Degree of Increase in Fluidity When Heated (ΔMFR)>

The degree of increase in fluidity when the composition was heated was evaluated based on the measurement results of melt flow rates measured with different preheating times. In the following evaluation, the preheating time is regarded as the heating time of the composition.

Specifically, using a melt indexer (manufactured by Toyo Seiki Seisaku-sho, Ltd.), pellets with a moisture content adjusted to 200 ppm or less by drying for 3 hours at a predetermined resin drying temperature appropriate for each component (A) were used to measure a MFR in retention for 20 minutes and a MFR in retention for 5 minutes under a load of 2160 g in accordance with ISO 1133. The test temperature was a temperature higher by 25°C than the melting point of each component (A) (250°C in the case of polybutylene terephthalate resins A-1 and A-2, 230°C in the case of polyester elastomer resin A-3, 205°C in the case of polyester elastomer resin A-4, and 250°C in the case of polyamide resin A-5). The measurement results were substituted into the following formula to determine ΔMFR.

ΔMFR = (MFR in retention for 20 minutes) - (MFR in retention for 5 minutes)

In the formula, the MFR in retention for 20 minutes is a melt flow rate measured in accordance with ISO 1133 with a preheating time of 20 minutes, and the MFR in retention for 5 minutes is a melt flow rate measured in accordance with ISO 1133 with a preheating time of 5 minutes.

<Tensile Strength, Tensile Elongation>

The pellets obtained were subjected to injection molding using an injection molding machine (J110AD-110H manufactured by The Japan Steel Works, Ltd.) at a cylinder temperature higher by 25°C than the melting point of each component (A), a mold temperature of 50°C, an injection speed of 50 mm/sec, and a holding pressure of 40 MPa to obtain ISO dumbbell test pieces in accordance with ISO3167. The test pieces obtained were subjected to tensile test measurement in accordance with ISO-527-1 and ISO-527-2.

[Table 1]

| | | | Examples | | | | | | | | |
|---|---|---|---|---|---|---|---|---|---|---|---|
| | | | 1 | 2 | 3 | 4 | 5 | 6 | 7 | 8 | 9 |
| Composition | (A-1) Polybutylene terephthalate | parts by mass | 29 | 75 | 50 | 29 | 29 | | | | |
| | (A-2) Polybutylene terephthalate | parts by mass | | | | | | 29 | | | |
| | (A-3) Polyester elastomer | parts by mass | | | | | | | 27 | 27 | |
| | (A-4) Polyester elastomer | parts by mass | | | | | | | | | 27 |
| | (A-5) Polyamide 6 | parts by mass | | | | | | | | | |
| | (B-1) Iron-based inorganic filler | parts by mass | 71 | 25 | 50 | 71 | 71 | 71 | 73 | 73 | 73 |
| | (B-2) Iron-based inorganic filler | parts by mass | | | | | | | | | |
| | (C-1) Phosphate-based compound | parts by mass | 0.4 | 0.2 | 0.4 | 0.8 | 0.05 | 0.4 | 0.4 | | 0.1 |
| | (C-2) Phosphate-based compound | parts by mass | | | | | | | | 0.4 | |
| | (C-3) Phosphite-based compound | parts by mass | | | | | | | | | |
| | (C-4) Phosphite-based compound | parts by mass | | | | | | | | | |
| | (C-5) Phosphite-based compound | parts by mass | | | | | | | | | |

(continued)

| | | | Examples | | | | | | | | |
|---|---|---|---|---|---|---|---|---|---|---|---|
| | | | 1 | 2 | 3 | 4 | 5 | 6 | 7 | 8 | 9 |
| | (C-6) Phosphorus compound | parts by mass | | | | | | | | | |
| | (C-7) Phosphorus compound | parts by mass | | | | | | | | | |
| | (C-8) Phosphorus compound | parts by mass | | | | | | | | | |
| | Antioxidant | parts by mass | 0.2 | 0.2 | 0.2 | 0.2 | 0.2 | 0.2 | 0.2 | 0.2 | 0.2 |
| | Mold release agent | parts by mass | 0.5 | 0.5 | 0.5 | 0.5 | 0.5 | 0.5 | 0.5 | 0.5 | 0.5 |
| Content of component (C) relative to 100 parts by mass of component (B) | | parts by mass | 0.56 | 0.80 | 0.80 | 1.13 | 0.07 | 0.56 | 0.55 | 0.55 | 0.14 |
| Evaluation | ΔMFR | g/10min | 21 | 20 | 24 | 35 | 27 | 30 | 9 | 19 | 10 |
| | Relative density | - | 2.9 | 1.5 | 2.2 | 3.1 | 3.0 | 2.9 | 3.0 | 3.1 | 2.9 |
| | Tensile strength | MPa | 46 | 80 | 78 | 43 | 32 | 50 | 17 | 10 | 18 |
| | Tensile elongation | % | 1.9 | 6.0 | 3.5 | 1.8 | 0.9 | 2.5 | 7.0 | 10.6 | 6.8 |

[Table 2]

| | | | Examples | | | | | | | | | |
|---|---|---|---|---|---|---|---|---|---|---|---|---|
| | | | 10 | 11 | 12 | 13 | 14 | 15 | 16 | 17 | 18 | 19 |
| Composition | (A-1) Polybutylene terephthalate | parts by mass | | 29 | 29 | 29 | 29 | 29 | 29 | 29 | 29 | 29 |
| | (A-2) Polybutylene terephthalate | parts by mass | | | | | | | | | | |
| | (A-3) Polyester elastomer | parts by mass | | | | | | | | | | |
| | (A-4) Polyester elastomer | parts by mass | | | | | | | | | | |
| | (A-5) Polyamide 6 | parts by mass | 27 | | | | | | | | | |
| | (B-1) Iron-based inorganic filler | parts by mass | 73 | 71 | 71 | | 71 | 71 | 71 | 71 | 71 | 71 |

(continued)

| | | | Examples | | | | | | | | | |
|---|---|---|---|---|---|---|---|---|---|---|---|---|
| | | | 10 | 11 | 12 | 13 | 14 | 15 | 16 | 17 | 18 | 19 |
| | (B-2) Iron-based inorganic filler | parts by mass | | | | 71 | | | | | | |
| | (C-1) Phosphate-based compound | parts by mass | 0.1 | 0.2 | | | | 0.01 | | 1.5 | | |
| | (C-2) Phosphate-based compound | parts by mass | | 0.2 | 0.4 | 0.4 | | | 0.01 | | | |
| | (C-3) Phosphite-based compound | parts by mass | | | | | 0.4 | | | | | |
| | (C-4) Phosphite-based compound | parts by mass | | | | | | | | | 0.4 | |
| | (C-5) Phosphite-based compound | parts by mass | | | | | | | | | | 0.4 |
| | (C-6) Phosphorus compound | parts by mass | | | | | | | | | | |
| | (C-7) Phosphorus compound | parts by mass | | | | | | | | | | |
| | (C-8) Phosphorus compound | parts by mass | | | | | | | | | | |
| | Antioxidant | parts by mass | 0.2 | 0.2 | 0.2 | 0.2 | 0.2 | 0.2 | 0.2 | 0.2 | 0.2 | 0.2 |
| | Mold release agent | parts by mass | 0.5 | 0.5 | 0.5 | 0.5 | 0.5 | 0.5 | 0.5 | 0.5 | 0.5 | 0.5 |
| Content of component (C) relative to 100 parts by mass of component (B) | | parts by mass | 0.14 | 0.56 | 0.56 | 0.56 | 0.56 | 0.01 | 0.01 | 2.11 | 0.56 | 0.56 |
| Evaluation | ΔMFR | g/10min | 5 | 25 | 27 | 20 | 31 | 70 | 71 | 80 | 13 | 54 |
| | Relative density | - | 2.8 | 3.0 | 3.0 | 3.0 | 2.9 | 3.0 | 3.0 | 3.1 | 3.1 | 3.1 |
| | Tensile strength | MPa | 60 | 48 | 35 | 48 | 63 | 31 | 28 | 28 | 43 | 35 |
| | Tensile elongation | % | 3.0 | 2.0 | 2.1 | 2.0 | 4.0 | 0.6 | 0.5 | 1.0 | 1.4 | 0.9 |

[Table 3]

| | | | Comparative Examples | | | | | | |
|---|---|---|---|---|---|---|---|---|---|
| | | | 1 | 2 | 3 | 4 | 5 | 6 | 7 |
| Composition | (A-1) Polybutylene terephthalate | parts by mass | 29 | 50 | | 29 | 29 | 29 | 29 |
| | (A-2) Polybutylene terephthalate | parts by mass | | | | | | | |
| | (A-3) Polyester elastomer | parts by mass | | | 27 | | | | |
| | (A-4) Polyester elastomer | parts by mass | | | | | | | |
| | (A-5) Polyamide 6 | parts by mass | | | | | | | |
| | (B-1) Iron-based inorganic filler | parts by mass | 71 | 50 | 73 | | 71 | 71 | 71 |
| | (B-2) Iron-based inorganic filler | parts by mass | | | | 71 | | | |
| | (C-1) Phosphate-based compound | parts by mass | | | | | | | |
| | (C-2) Phosphate-based compound | parts by mass | | | | | | | |
| | (C-3) Phosphite-based compound | parts by mass | | | | | | | |
| | (C-4) Phosphite-based compound | parts by mass | | | | | | | |
| | (C-5) Phosphite-based compound | parts by mass | | | | | | | |
| | (C-6) Phosphorus compound | parts by mass | | | | | 0.4 | | |
| | (C-7) Phosphorus compound | parts by mass | | | | | | 0.4 | |
| | (C-8) Phosphorus compound | parts by mass | | | | | | | 0.4 |
| | Antioxidant | parts by mass | 0.2 | 0.2 | 0.2 | 0.2 | 0.2 | 0.2 | 0.2 |
| | Mold release agent | parts by mass | 0.5 | 0.5 | 0.5 | 0.5 | 0.5 | 0.5 | 0.5 |
| Content of component (C) relative to 100 parts by mass of component (B) | | parts by mass | 0 | 0 | 0 | 0 | 0 | 0 | 0 |
| Evaluation | ΔMFR | g/10min | 105 | 80 | 102 | 103 | 106 | 150 | 110 |
| | Relative density | - | 3.0 | 2.2 | 3.0 | 3.0 | 3.0 | 3.0 | 3.0 |
| | Tensile strength | MPa | 31 | 50 | 10 | 30 | 29 | 28 | 27 |
| | Tensile elongation | % | 0.6 | 1.2 | 6.1 | 0.5 | 0.7 | 0.6 | 0.5 |

As is clear from Tables 1 to 3, as for the compositions of Examples 1, 4, 5, 11, 12, and 14 to 19 in which the thermoplastic resin as the component (A) was mixed with the iron-based inorganic filler as the component (B) and the phosphite-based compound and/or phosphate-based compound as the component (C) in a specified range of ratios, increases in fluidity when the compositions were heated were suppressed, but as for the compositions of Comparative

Examples 1, 5, 6, and 7, which did not contain the specific component (C), fluidity showed a significant increase upon heating, and there is concern about a detrimental effect on the appearance and mass productivity of molded articles obtained from the compositions. The comparison between Example 3 and Comparative Example 2, the comparison between Examples 7 to 8 and Comparative Example 3, and the comparison between Example 13 and Comparative Example 4 show that similar trends were discernible even when the types and quantitative ratios of the component (A) and the component (B) were changed.

Furthermore, from the above comparisons, improvement in the mechanical properties (tensile strength and tensile elongation) can be confirmed, and it can be confirmed that the effect of this improvement in the mechanical properties became more excellent when the content of the component (C) was adjusted to 0.02 to 1.4 parts by mass relative to 100 parts by mass in total of the component (A) and the component (B).

Moreover, as for Examples 1 to 14 and 18 to 19 in which the content of the component (C) was adjusted to 0.02 to 1.4 parts by mass relative to 100 parts by mass in total of the component (A) and the component (B), it can be confirmed that the effect of suppressing increases in fluidity when the compositions were heated became even more excellent.

Among the phosphate-based compounds, it can be confirmed that when the phosphate-based compound represented by the general formula (C2-1) where $R^4$ was an aliphatic hydrocarbon group having 1 to 10 carbon atoms (particularly 1 to 5 carbon atoms) was used, the effect of suppressing an increase in fluidity when the composition was heated and the tensile strength of the molded article obtained became even more excellent.

INDUSTRIAL APPLICABILITY

According to the present invention, it is possible to produce a resin- or elastomer-containing composition that exhibits an excellent effect of suppressing an increase in fluidity when heated, and therefore, such a composition is a remarkable material that can achieve weight reduction due to replacement for metals and the like and can improve the degree of freedom in shape, the molding cycle, and the mechanical properties of the material.

## Claims

1. A composition comprising a component (A) that is at least one selected from a thermoplastic resin and a thermoplastic elastomer and a component (B) that is an iron-based inorganic filler at a mass ratio (component (A)/component (B)) in a range of 5/95 to 80/20, and comprising a component (C) that is at least one selected from a phosphite-based compound and a phosphate-based compound in an amount not exceeding 5 parts by mass relative to 100 parts by mass in total of the component (A) and the component (B).

2. The composition according to claim 1, wherein ΔMFR determined by the following formula as measured in accordance with ISO 1133 is 50 g/10 min or less:

   ΔMFR = (MFR in retention for 20 minutes) - (MFR in retention for 5 minutes)

   wherein the MFR in retention for 20 minutes is a melt flow rate measured with a preheating time of 20 minutes, and the MFR in retention for 5 minutes is a melt flow rate measured with a preheating time of 5 minutes; and the melt flow rate is measured under a load of 2160 g and at a temperature higher by 25°C than a melting point of the component (A).

3. The composition according to claim 1 or 2, wherein the component (A) comprises at least one selected from the group consisting of a polyester-based resin, a polyester elastomer, a polycarbonate-based resin, a polyamide-based resin, a polyphenylene sulfide-based resin, and a polyolefin-based resin.

4. The composition according to claim 1 or 2, wherein the component (C) is at least one selected from the group consisting of a compound represented by the following formula (C1-1), a compound represented by the following formula (C1-2), and a compound represented by the following formula (C2-1):

   [Chemical 1]

   $$P\left(O-R^1\right)_3 \qquad (C1-1)$$

   wherein $R^1$ represents an aliphatic hydrocarbon group having 1 to 30 carbon atoms or an aromatic hydrocarbon group

having 6 to 30 carbon atoms,

[Chemical 2]

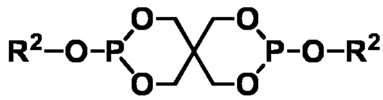

(C1-2)

wherein $R^2$ represents an aliphatic hydrocarbon group having 1 to 30 carbon atoms or an aromatic hydrocarbon group having 6 to 30 carbon atoms,

[Chemical 3]

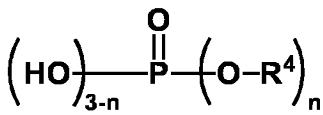

(C2-1)

wherein $R^4$ represents an aliphatic hydrocarbon group having 1 to 30 carbon atoms, and n is 1 or 2.

**5.** The composition according to claim 1 or 2, wherein the component (B) is at least one selected from the group consisting of iron metal, an alloy of iron with other element(s), and an ionic iron-containing compound, and the alloy of iron with other element(s) is any one of Fe-C alloy, Fe-Cr alloy, Fe-Cr-Mo alloy, Fe-Cr-Al alloy, Fe-Cr-Si alloy, Fe-Mn alloy, Fe-Mn-Mo alloy, Fe-Ni alloy, Fe-Ni-Cr alloy, Fe-Ni-Co alloy, Fe-Co alloy, Fe-Si alloy, and Fe-Si-Al alloy.

**6.** A molded article comprising a component (A) that is at least one selected from a thermoplastic resin and a thermoplastic elastomer and a component (B) that is an iron-based inorganic filler at a mass ratio (component (A)/component (B)) in a range of 5/95 to 80/20, and comprising a component (C) that is at least one selected from a phosphite-based compound and a phosphate-based compound in an amount not exceeding 5 parts by mass relative to 100 parts by mass in total of the component (A) and the component (B).

**7.** The molded article according to claim 6 having a gate mark.

## INTERNATIONAL SEARCH REPORT

International application No.
**PCT/JP2023/039505**

**A. CLASSIFICATION OF SUBJECT MATTER**

***C08L 101/00***(2006.01)i; ***C08K 3/08***(2006.01)i; ***C08K 5/521***(2006.01)i; ***C08K 5/524***(2006.01)i
FI: C08L101/00; C08K3/08; C08K5/521; C08K5/524

According to International Patent Classification (IPC) or to both national classification and IPC

**B. FIELDS SEARCHED**

Minimum documentation searched (classification system followed by classification symbols)

C08L101/00; C08K3/08; C08K5/521; C08K5/524

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-16388 A (TOYO INK SC HOLDINGS CO., LTD.) 21 January 2022 (2022-01-21) paragraphs [0110], [0122], table 2, example 24 | 1-7 |
| X<br>A | JP 2007-169417 A (KURODA DENKI KK) 05 July 2007 (2007-07-05) paragraph [0047], table 3-1 | 1-3, 5-7<br>4 |
| X<br>A | WO 2007/013436 A1 (SONY CHEMICAL & INFORMATION DEVICE CORP.) 01 February 2007 (2007-02-01) paragraphs [0112], table 6, comparative example 9B | 1-3, 5-7<br>4 |
| A | JP 2018-178019 A (MITSUBISHI ENGINEERING PLASTICS CORP.) 15 November 2018 (2018-11-15) paragraphs [0047], [0097] | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/039505**

| Patent document cited in search report | Publication date (day/month/year) | Patent family member(s) | Publication date (day/month/year) |
|---|---|---|---|
| JP 2022-16388 A | 21 January 2022 | EP 4180485 A1<br>paragraphs [0129]-[0135], [0149], table 2, example 24<br>WO 2022/009956 A1<br>TW 202203264 A<br>KR 10-2023-0037548 A<br>CN 115943468 A | |
| JP 2007-169417 A | 05 July 2007 | (Family: none) | |
| WO 2007/013436 A1 | 01 February 2007 | TW 200731299 A | |
| JP 2018-178019 A | 15 November 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002105328 A
- JP 2005106424 A
- JP 2010235729 A
- JP 3261274 B
- JP H688012 A
- JP 502 A
- JP 2022179002 A